# EUROPEAN PATENT APPLICATION

(11) **EP 1 674 385 A1**
(43) Date of publication of application: **28.06.2006**
(21) Application number: 05380273.2
(22) Date of filing: 21.12.2005
(51) Int. Cl.: B62K 9/02, B62K 15/00

(54) **Toy tricycle folding device**

(30) Priority: 22.12.2004 ES 200402883 U
(71) Applicant: Juguetes Pico, S.A., 03440 Ibi (Alicante) (ES)
(72) Inventor: Bernabeu Gisbert, Francisco Antonio, 03440 IBI (Alicante) (ES)
(74) Representative: Ungria Lopez, Javier

(57) **Abstract**

The toy tricycle comprises a front frame (1) provided with handlebars (2), a front wheel (3) and an oblique arm (7) whereon a seat body (8) is assembled; and also comprises a rear frame (4) provided with rear wheels (5) and a rack (6) . The rear frame (4) can move axially with respect to the front frame (1). The toy tricycle also comprises a folding device with an L-shaped rod (9), whose shorter section (9') passes through a hole of the rear frame (4) and its longer section (9") projects forward and goes through a passage provided for in the seat body (8). This all permits the separation of the frames and their tilting over the rod (9). The folding device also comprises a screw (10) that fastens and blocks the seat body (8) on any point of the oblique arm (7) and fastens the frames in the unfolded position.

## Description

### OBJECT OF THE INVENTION

As expressed in the title of this specification, the present invention refers to a toy tricycle folding device that is made in such a way that it permits easy and efficient folding of the tricycle. Besides, it prevents the loss of the part that takes part in the blocking between certain parts of the general structure of the tricycle.

Therefore, the object of the invention is to provide the toy sectors and users in general with a tricycle that can be folded in order to noticeably reduce the space taken up thereby. Besides, it allows locking in the desired position and without the possibility of losing the part that carries out the fastening or blocking of the parts.

### BACKGROUND OF THE INVENTION

Toy tricycles tend to be comprised of a frame wherein two rear wheels and a front wheel are conveniently placed, as well as the corresponding handlebars and the seat part, all forming a single and compact body that at the very best can be disassembled by loosening the screws. This proves to be troublesome and with a tremendous loss of time in the assembly/disassembly, in the event that it is desired to reduce the general space taken up by the tricycle in order to be put away, in order to transport it in a vehicle, etc.

In other words, the toy tricycles that are known, despite their reduced size, take up space that many times can prove to be troublesome due to the lack of space when putting it away or due to the difficulty in transporting it.

The fact that there are tricycles that permit the extendibility of the rear part with respect to the front part is also noteworthy. It blocks in the desired position by means of a screw, but the latter is assembled in this manner so that it can be easily handled by a child and besides it may be lost since it is not provided with means that prevent such a loss from taking place.

### DESCRIPTION OF THE INVENTION

The tricycle folding device object of the invention has some characteristics based on which the above-cited problems are solved, in other words, the folding up of the tricycle is permitted, so that it can take up less space and can be put away and transported more easily, since the space taken up thereby has been reduced in the folded position.

On the other hand, the device of the invention is comprised in such a way that it prevents the loss of the part that takes part in the fastening or blocking between the parts of the tricycle.

In this sense, the device in question is comprised of an L-shaped rod with a perforated part in its path, defining a shorter end section that is connected to the frame of the back wheels, for the passage of said end frame through a hole of said frame. The latter is capable of rotating on the rod. The rest of the rod, defining the other side of the perforated part, in other words, the straight longer section is provided in order to connect to a body from which the seat of the tricycle originates. The rod can rotate thereon and the rear frame with the rod. Besides, it can move axially with respect to said seat body.

The rear frame of the rear wheels has a part that emerges forward, through which said rear frame is connected to the front frame, which supports the handlebars of the front wheel. The frame has an oblique arm upon which the seat body is assembled, with the ability to move forward and backward. It is blockable in any position by means of a radial screw whose tightening entails the blocking of said seat body.

Said screw is assembled in such a way that it cannot be entirely unscrewed, therefore, it will always be connected to the seat body. Besides, it has safety means that prevent it from being unscrewed by simple rotating thereof, in such a way that in order to unscrew it entirely it is necessary to press and rotate at the same time. This prevents undesired handling thereof by children.

On the basis of said characteristics and parts of the device of the invention, in order to fold it up from the normal usage position of the tricycle, it is necessary to release the seat body from the oblique arm, without managing to separate it, after unscrewing the blocking screw, then proceeding to pull the rear frame forward in order to separate it from the seat body. Then the latter is rotated 90° on the former, followed by a slight movement forward and a small rotation in the opposite direction, in order to finally move it forward, at the same time that the seat body is pushed and moved forward, along the entire oblique arm. The entire assembly is attached to the front part, in other words, the handlebars and the front wheel, with the subsequent reduction of the space taken up thereby, which permits easier storage of the tricycle. It is even easier to transport the tricycle.

As to the rotation of 90° of the rear frame with respect to the front frame, its only purpose is to get said rear frame to be placed on the same plane as the oblique arm of the front frame.

On the other hand, it is noteworthy that the fastening between both the front and rear frames is done by housing the screw connected to the seat body in a hole of the extension of the rear frame that is connected in the front frame.

It should also be commented that in order to prevent both parts of the tricycle from separating, a washer or stop has been provided for on the end of the rod, that prevents said rod from coming out of the seat body.

### BRIEF DESCRIPTION OF THE DRAWINGS

In order to complete the description that is going to be made hereinafter and for the purpose of providing a better understanding of the characteristics of the invention, a set of drawings based on which the innovations and advantages of the toy tricycle folding device of object of the invention will be more easily understood, is attached to the present specification.
Figure 1 shows a representation according to a general perspective of a tricycle with the folding device of the invention, where one can see a detailed view of the device itself whereas the folding of the tricycle is achieved, once the seat body and a rear framework or rack connected to the rear frame of the tricycle itself have been removed from the tricycle.
Figure 2 shows a perspective view of the detailed view corresponding to the device in its initial operating stage in order to achieve the folding of the tricycle.
Figure 3 shows another detailed view of the device in the tricycle assembly with the seat and the rear rack removed. One can see the rear frame of the tricycle already rotated 90° in this figure.
Figure 4 shows a perspective view of the tricycle of figure 1 in a position wherein the rear frame with the rack is rotated and moved forward, until it comes up against the seat body.
Figure 5 shows another perspective view of the tricycle totally folded up, which corresponds to the preceding figure with the movement of the seat body forward, showing the reduced space taken up by the tricycle with respect to the space taken up in figure 1.

### DESCRIPTION OF THE PREFERRED EMBODIMENT

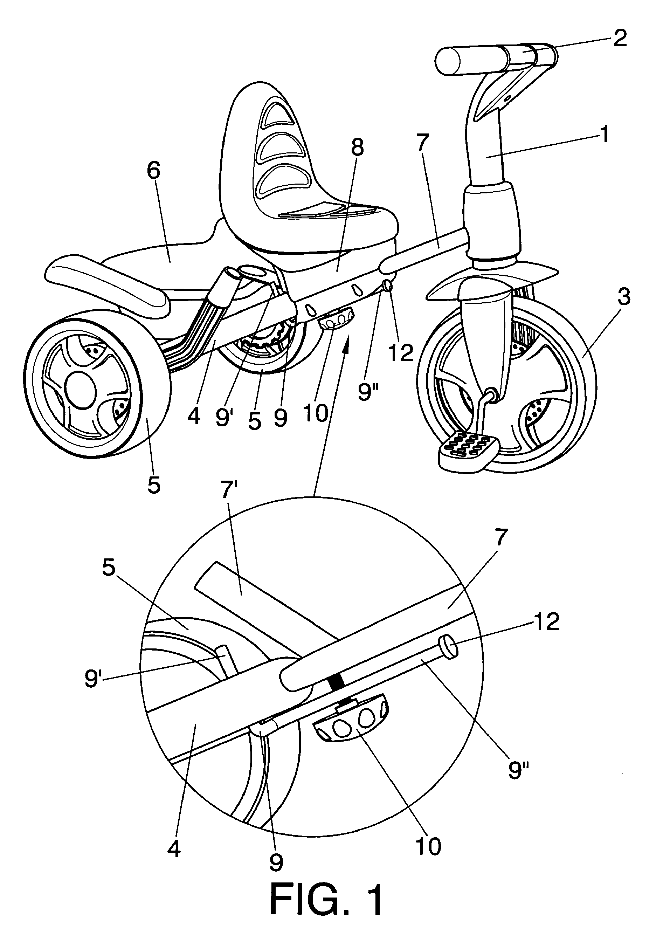

In view of the commented figures and specifically in connection with figure 1, one can see the tricycle of the invention that includes a front frame 1 with the handlebars 2 and a front wheel 3, which also comprises a rear frame 4 with the two rear wheels 5. An injected body that is going to form a rack 6 is assembled on said rear frame, whereas the front frame 1 includes an oblique arm 7 projected backward on which the injected seat body 8 is assembled, all conventionally.

The rear frame 4 can be moved with respect to the arm 7 corresponding to the frame 1.

Now then, from these characteristics, the novelty of the invention is comprised of a device that permits the folding up of the tricycle. This device is based on the combination of a rod 9 and a tightening or blocking screw 10, a rod 9 that is L-shaped, whose shorter branch 9' passes through a hole made for this purpose in the rear frame 4, whereas the longer branch 9" of said rod 9, that is defined on the other side of the perforated side that is formed in said rod, is longer and runs axially. It is housed in a passage made for this purpose in the bottom part of the body 8 of the seat. A guiding means on said seat body is established and thus the front frame is connected to the rear frame, or in other words, the front part of the tricycle is connected to the rear part thereof.

The free end of the rod 9 has a stop or washer 12 to prevent removal from the seat body 8, in other words, to prevent the branch 9" from coming out of the seat body 8 and with this the separation of the assembly.

The screw 10 is assembled on the injected body 8 to which the tricycle seat belongs, with the capacity to rotate and carry out the tightening and subsequent blocking of the seat body 8 on the oblique arm 7, with the particularity that the assembly of said screw 10 is such that it is impossible to unscrew it and separate it from the seat body 8 for the purpose of preventing it from being lost.

The injected body 8 to which the seat belongs is assembled on the arm 7 that can slide forward and backward, a short arm 7' which is shown in the detailed view of figure 1 is projected backward and upward, in other words with an obliqueness contrary to that of the above-cited arm 7, collaborates in the assembly. Said arm 7' is provided for the connection with the pushing tube-shaped body.

On its part, the rear frame 4 has in its frontmost part, an extension 11 that is coupled by a connector to the oblique arm 7, thus connecting both the front and rear frames of the tricycle. They are fastened by a screw 10 that is inserted in a hole 11' of said extension 11.

On its part, the screw 10, aside from having appropriate means that prevent it from coming loose from the injected seat part 8, is provided with means that prevent the unscrewing thereof by simple rotation. This requires simultaneous pressing and rotating of the screw 10 in order to unscrew it entirely. This has the purpose of preventing children from doing something that may harm them.

In accordance with the cited characteristics, the following operations are carried in order to fold the tricycle:

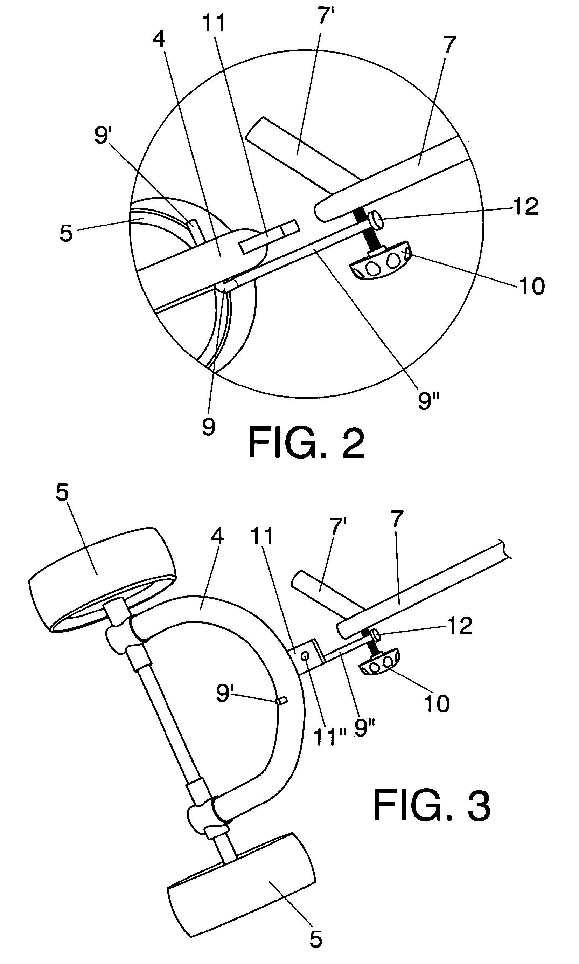

First of all, the screw 10 is unscrewed releasing the blocking of the seat part or body 8. The seat body or part is allowed to be able to move with respect to the oblique arm 7 of the front frame 1. Afterwards, the rear frame 4 is pulled backward by disconnecting the front part or extension 11 from the oblique arm 7 of the front frame 1, when a rotation of 90° of said rear frame 4 would take place. Thus, the position shown in figure 3 is reached, but both frames are kept connected by virtue of the rod 9, specifically by virtue of the straight and elongated section 9" of said rod 9 that is still connected to the seat body 8. This enables the rear frame to rotate 90° with its wheels remaining on the same plane as that formed by the front frame and the oblique arm 7.

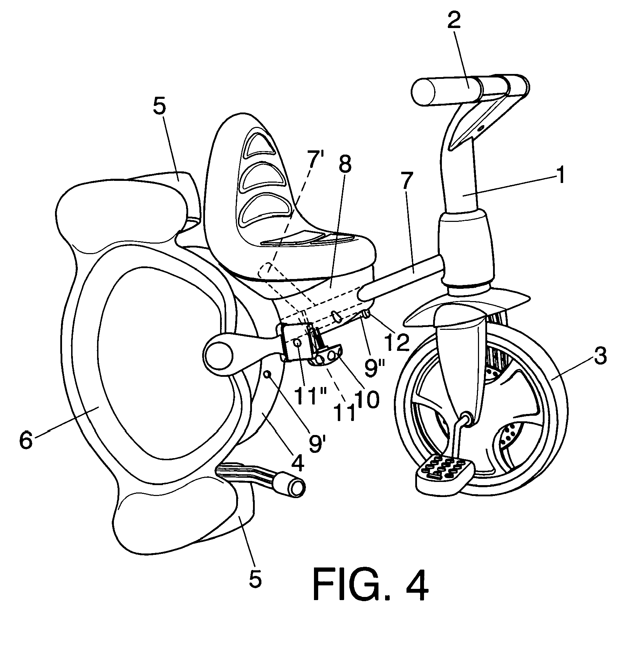

Once the position of figure 3 has been reached, the rear frame 4 moves forward, as shown in figure 4, at the same time that a rotation of approximately 15° takes place, but in the opposite direction towards where it had rotated before.

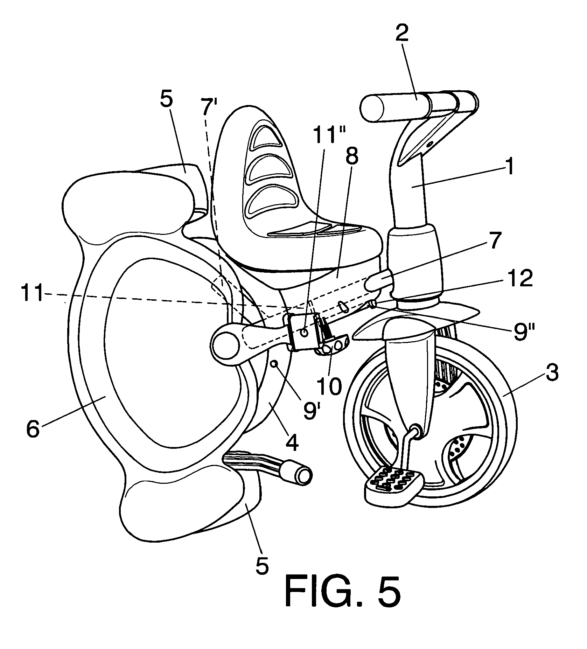

Then said rear frame 4 is pushed forward, in other words, towards the front frame 1, pushing therewith and pulling the seat body 8 on the oblique arm 7, until the front or assembly frame 1 on which the handlebars 2 are placed is reached, as shown in figure 5. Hence, the tricycle is totally folded up and takes up a minimum amount of space, blocking in this position by means of tightening the corresponding screw 10.

The unfolding and corresponding forming of the tricycle in order to achieve the position of use thereof is done in a way contrary to the way explained above.

## Claims

1. Toy tricycle folding device, which being applicable in tricycles with a front part or front frame (1) provided with the corresponding handlebars (2) and front wheel (3), as well as an oblique arm (7) projected backward in a slanted manner, being complemented with a rear frame (4) with rear wheels (5) and a rack type injected body (6), the corresponding seat body (8) being assembled on the oblique arm (7), all in such a way that the rear frame (4) can be moved axially with respect to the front frame (1), is **characterized in that** it comprises an L-shaped rod (9), with a perforation between its two branches, defining a shorter section (9') that is connected to the rear frame (4) since said section (9') passes through a hole in the cited rear frame (4), whereas the longer section (9") of the rod (9) is projected forward and passes through a passage provided for in the rear part of the seat body (8) assembled on the oblique arm (7) of the front frame (1); and a tightening screw (10) that fastens and blocks the seat body (8) on any point along the oblique arm (7) of the front frame (1) has been provided for.

2. Toy tricycle folding device, according to claim 1, **characterized in that** the tightening and blocking screw (10) is connected to the seat body (8) with the possibility of rotation and therefore, unscrewing, but with the impossibility of it become separated, in order to prevent the loss thereof, said screw (10) having safety means that prevent the unscrewing thereof by simple rotation, requiring simultaneous pressing and rotation in order to unscrew same.

3. Toy tricycle folding device, according to any one of the preceding claims, **characterized in that** the rear frame (4) has a front extension (11) that is coupled by a connector to the rear end of the oblique arm (7), with the capacity to separate by pulling said frame (4) backward, in order to permit the rotation thereof and its movement forward, pulling with it the seat body (8) until the handlebar column (2) corresponding to the front frame (1) is reached, establishing the folding and corresponding reduction of the space taken up by the tricycle assembly, wherein the rear frame with its wheels remain on the same plane as the front frame.

4. Toy tricycle folding device, according to any one of the preceding claims, **characterized in that** the longer section (9") of the rod (9) comprises a guiding means of the seat body (8), the rod having on its free end a washer or stop (12) to prevent said rod from separating from the seat body (8).

5. Toy tricycle folding device, according to claim 3, **characterized in that** the connectable extension (11) comprises a hole (11') for the end of the blocking and fastening screw (10) between the front and rear frames.
